# EUROPEAN PATENT APPLICATION

(11) **EP 3 249 586 A1**
(43) Date of publication of application: **29.11.2017**
(21) Application number: 16171458.9
(22) Date of filing: 26.05.2016
(51) Int. Cl.: G06Q 10/06

(54) **METHOD FOR STORING DATA FOR DETERMINATION OF A SPECIFIC USER'S EXPOSURE TO A DANGER FACTOR CAUSED BY USAGE OF AN APPARATUS**

(71) Applicant: Sony Mobile Communications Inc, Tokyo 140-0002 (JP)
(72) Inventor: ANDREJ, Petef, 224 74 Lund (SE); JOHANSSON, Magnus, 244 71 Dösjebro (SE); FALK, Mattias, 226 52 Lund (SE); RASMUSSON, Jim, 235 41 Vellinge (SE)
(74) Representative: Awapatent AB

(57) **Abstract**

The disclosure relates to a method for storing data for determination of a specific user's exposure to a danger factor caused by usage of an apparatus, the method comprising; assigning an apparatus key to the apparatus, the apparatus comprising a communication device for communication with a cellular wide range network and a communication device for short range communication with a wearable device; assigning a device key to the wearable device, the wearable device comprising a short range communication device for short range communication with the apparatus, wherein the wearable device is associated with a specific user; associating the apparatus key with the device key thereby establishing which user is presently associated with which apparatus; during operation of the apparatus: logging data pertaining to actual use of the apparatus; measuring a quantity of a physical entity and comparing the logged data and the measurement pertaining to the actual exposure with a predetermined allowable exposure; storing data pertaining to the logging, measuring or comparing together with the device key in a memory.

## Description

### Field of invention

The inventions relates to a method for storing data for determination of a specific user's exposure to a danger factor caused by usage of an apparatus.

### Technical Background

Professional tools used by the workers within the construction industry or by private persons are often powerful and can in many cases be dangerous if used in the wrong way or if used for too long time periods.

The use of vibrating tools may e.g. cause so-called vibration white finger. Examples of such tools are e.g. hand-held vibrating power tools, such as: jack hammers, impact wrenches, jigger picks, angle grinders, whacker plates, pneumatic drills, riveting tools, gas powered chainsaws or the like.

Other danger factors to consider, apart from vibration, are e.g. exposure to noise, dust, chemicals, exhaust gases.

Dangerous exposures can be defined as peak value exposures and/or as accumulated dose exposures.

### Summary of invention

It is an object of the invention to provide a method making it technically possible to actually keep track of a user's actual exposure to different danger factors.

This object has been achieved by a method for storing data for determination of a specific user's exposure to a danger factor caused by usage of an apparatus, the method comprising
assigning an apparatus key to the apparatus, the apparatus comprising a communication device for communication with a cellular wide range network and a communication device for short range communication with a wearable device,
assigning a device key to the wearable device, the wearable device comprising a short range communication device for short range communication with the apparatus, wherein the wearable device is associated with a specific user,
associating the apparatus key with the device key thereby establishing which user is presently associated with which apparatus, during operation of the apparatus
   logging data pertaining to actual use of the apparatus, wherein actual use of the apparatus causes the user being subjected to one or more predetermined danger factors caused by the apparatus, whereby the logged data thereby pertains to actual exposure of the user to the danger factors, measuring a quantity of a physical entity pertaining to the predetermined danger factors during actual use of the apparatus, thereby acquiring a measurement pertaining to actual exposure,
   comparing the logged data and the measurement pertaining to
   the actual exposure with a predetermined allowable exposure, storing data pertaining to the logging, measuring or comparing together with the device key in a memory.

By assigning the apparatus key to the apparatus and provide it with the dual communication means in combination with assigning the device key to the wearable device being associated with a specific user and provide the wearable device with the short range communication means, a technical platform has been achieved. By associating the apparatus key with the device key it is thereby established which specific user is presently associated with which apparatus. With these preparations it is possible to log data pertaining to actual use, to measure a quantity of a physical entity, such as noise and/or vibration, and to make a comparison between actual exposure and predetermined allowable exposure. By storing the data from the logging and/or data from the measuring and/or data from the comparison together with the device key in a memory it is possible to actually keep track of a user's actual exposure to different danger factors. It may be noted that the predetermined allowable exposure may relate to peak value exposures and/or as accumulated dose exposures.

In one set-up, the wearable device may be an ID-card or the like having a number stored e.g. in an RFID-unit. The device key may be this number retrieved from the card. When the user retrieves the apparatus from a central inventory, the user presents the ID-card and the number read from the card is associated with the apparatus. This reading of the number from the ID-card is an assigning of the device key. The device key (which by being present on an ID-card is also associated with a user) is associated with an apparatus via the apparatus key assigned to the apparatus. Thereafter it is possible to track and/or control the operation of the apparatus and to track and/or control the user's actual exposure to different danger factors.

In one set-up, the wearable device is a smartwatch and/or a mobile phone. The smartwatch or mobile phone may run a software application including a device key. The device key may be generated by the software application or may be received by the software application. The smartwatch or mobile phone may communicate its device key to the apparatus and/or to a remote server. The apparatus may also run a software application including an apparatus key. The apparatus key may be generated by the software application or may be received by the software application. The device key may be associated with the user e.g. by the profile or accounts set-up by the user on the wearable device. The profiles or accounts may be set-up to require a login before it is possible to assign a device key and/or before it is possible to associate the device key with the apparatus key. Such a login procedure may also be useful to control if operation of the apparatus is allowed when the user is about to actually use the apparatus. The key may alternatively or as a complement be stored on a secure element, for example a SIM-card.

It may be noted that the wearable device may be associated with a specific user or a group of users. It is e.g. conceivable that a bracelet is associated with a number of employees and then the specific association to a specific user is performed in a secondary association e.g. based on information from a mobile phone

In one set-up the assigning of the keys and the association of the keys is performed when the user picks up the apparatus in a central inventory or when the user rents the apparatus at a rental service.

The logging, measuring and comparing takes place when the user actually operates the apparatus on the work site.

The assigning of the keys and the association may be performed by the apparatus itself when set in an association mode. Alternatively, the assigning of the keys and the association may be performed by a remote system being able to communicate with the apparatus and optionally also with the wearable device.

It may be noted that the comparison may be continuously or intermittently performed during operation of the apparatus. The subsequent comparisons with the predetermined allowable exposure may be performed more often or more seldom in response to a change in the actual measurement of the quantity of the physical entity. If e.g. the measured vibrations increase it may be appropriate to compare with the predetermined allowable exposure more frequently.

The wearable device may be a smart watch, a bracelet, a smartcard, etc. It may be noted that the wearable device may be any a clothing or accessory incorporating electronic circuitry for registering, processing and/or communication of data. The wearable device may be part of the a short range communication network of wearable devices and may comprise electronics, software, sensors and/or connectivity to enable the devices to exchange data between each other or with external devices connected to the network such as an apparatus used by the person wearing the wearable device.

The wearable device may also be a mobile phone. It may also be noted that the wearable device may be a distributed device, e.g. comprising a sensor positioned at one part of a clothing and a communication device for communicating with the apparatus positioned at another part of a clothing. The wearable device may also be distributed in the sense that it comprises a smartwatch and a mobile phone.

Preferred embodiments appear in the dependent claims and in the description.

At operation of the apparatus, the apparatus may check if the wearable device is within reach of the short range communication. This check may be performed at the initiation of the operation, such as when starting the apparatus. The check may be performed continuously during operation. The check may be performed intermittently during operation. The check may be performed when ending the operation. The check may be performed according to any combination of the above. By checking if the wearable device is within reach of the short range communication, it is possible to with a greater certainty come to the conclusion that it is the associated user that actually operates the apparatus and that the data pertaining to the logging, measuring or comparing actually relates to the associated user.

The method may be used for controlling operation of the apparatus. In response to the wearable device being out of range of the short range communication with the apparatus, the apparatus may be set in a safe mode in which the apparatus is inoperable or operable in a restricted manner.

The safe mode may e.g. a mode where the apparatus is completely inoperable. The safe mode may alternatively be that the apparatus is operable only in a restricted manner. This latter may e.g. be that the apparatus is operable such that it may be removed from the workpiece area in a safe manner but that it may not be actively used to work the workpiece. It is e.g. applicable for a drill, a saw or other kinds of apparatuses that otherwise would get stuck in the workpiece. It is e.g. also applicable for large apparatuses having a tool supported on a chassis with driving tires or belts; the tool such as a vibratory part or a drilling part may e.g. not be operated but the driving tires or belts may be operated to remove the large apparatus from the work area.

By having the apparatus being set in a safe mode in response to the wearable device being out of range of the short range communication with the apparatus it is possible to with a greater certainty restrict the apparatus to be operated only by the associated user or at least under the supervision of the associated user.

If the short range communication protocol is e.g. BAN (Body Area Network) it is possible to be close to certain that it is the associated user that operates the apparatus.

By controlling the apparatus such that it is set in a safe mode in response to the wearable device being out of reach, it is possible to use the method to control that only users having adequate training may operate the apparatus.

The method may further comprise in response to the actual exposure reaching a predetermined allowable exposure, setting the apparatus in a safe mode in which the apparatus is inoperable or operable in a restricted manner. This way a method for controlling operation of the apparatus is achieved.

The measuring of a quantity of a physical entity may be performed by a sensor positioned in or on the apparatus. This is a robust manner of providing the measurement. A suitably positioned sensor may e.g. provide sufficient information concerning the user's exposure to a danger factor. An accelerometer positioned in a handle of the tool may provide relevant information concerning the user's exposure to vibration.

The method may further comprise providing an accessory being provided with a communication device for short range communication with the apparatus. This may be used to support a sensor and/or to be used to confirm that the user wears required safety equipment.

The measuring of a quantity of a physical entity may be performed by a sensor positioned in or on an accessory to the apparatus, wherein the accessory is provided with a communication device for short range communication with the apparatus. This provides the possibility to accurately measure the user's exposure to a danger factor which is influenced by e.g. the user's position relative to the apparatus and/or the environment. This is e.g. useful when determining exposure to sound or dust. The sound and dust exposure will typically be higher if the apparatus is operated indoors compared to if it is operated outdoors. By providing the measuring sensor on an accessory, such as an ear protection or a filtering face mask, it is possible to accurately determine the actual exposure. The accessory may also be a separate entity which the user is to position in a representative position in the environment.

The accessory may be a wearable accessory, preferably a safety equipment to be worn during operation of the apparatus.

In response to the accessory being out of range of the short range communication with the apparatus, the apparatus may be set in a safe mode in which the apparatus is inoperable or operable in a restricted manner. This way it is possible to secure that the apparatus is only operated when the user actually wear the required safety equipment.

It may be noted that the accessory may be of a kind having have a communication device but not a sensor and may in that case be used to make sure that the user wears the required safety equipment.

The measuring of a quantity of a physical entity may be performed by a sensor positioned in or on the wearable device. It is e.g. convenient to use an accelerometer typically present in smartwatches to determine the user's exposure to vibration. If the user wears a headset connected to the wearable device it may be used to determine exposure to sound.

The short range communication may comprise Bluetooth, low energy Bluetooth, infrared, near field communication (NFC), ultraband, Zigbee, Wifi, Infrared communication, ultrasound, or RFID. These wireless technologies have been developed for short distance communication, typically a few centimetres to several meters. These technologies are commonly referred to as short range communication technologies.

The cellular wide range network may be a local area network, a LAN, an internet, or a telecommunication network. The cellular wide range network may e.g. be based on standards such as LTE, GSM, UMTS, and WCDMA.

In short the standards referred to are:
LTE (Long-Term Evolution) commonly marketed as 4G LTE (fourth generation LTE) is a standard for wireless communication of high-speed data for mobile phones and data terminals. Different LTE frequencies and bands used in different countries will mean that only multi-band phones will be able to use LTE in all countries where it is supported.
GSM (Global System for Mobile Communications, originally Groupe Special Mobile), is a standard developed by the European Telecommunications Standards Institute (ETSI) to describe the protocols for second-generation (2G) digital cellular networks used by mobile phones.
UMTS (Universal Mobile Telecommunications System) is a third generation mobile cellular system for networks based on the GSM standard. Developed and maintained by the 3GPP (3rd Generation Partnership Project). UMTS uses wideband code division multiple access (W-CDMA) radio access technology to offer greater spectral efficiency and bandwidth to mobile network operators.

The wearable device may be associated with the user by the wearable device comprising a device memory in which there is stored data pertaining to the device key, wherein the wearable device communicates with the apparatus and transmit information concerning its device key to the apparatus, and wherein the apparatus communicates with a remote server and transmit information concerning the device key to the remote server, wherein the remote server comprises a memory comprising information concerning the device key and a user associated with the device key. This manner of associating the wearable device with a user may e.g. be useful when the wearable device is an ID-card having the key stored in an RFID-unit.

The wearable device may be associated with the user by the wearable device comprising a device memory in which there is stored data pertaining to the device key and data pertaining to the user. This manner of associating the wearable device with a user may e.g. be useful if the wearable device is a smartwatch or a mobile phone having information concerning the user stored in its memory. It may be noted that an ID-card with an RFID-unit may comprise both a key and information concerning the user e.g. in the form of a personal number, a social security number, an employee number or the like.

It may be noted that the short range communication used for instance to determine if a safety equipment is worn or not may be different from the short range communication used to transmit the device key from the wearable device to the apparatus. It is e.g. suitable to use BAN (Body Area Network) as a means to determine if the safety equipment is worn or not. It is e.g. suitable to use RFID to retrieve the device key if the device key resides on a user's ID-badge. Alternatively it is e.g. suitable to use BLE to retrieve the device key if the device key resides in a user's smartwatch. It is preferred that the apparatus, accessories, and the device support more than one such communication protocol.

### Brief description of the drawings

The invention will by way of example be described in more detail with reference to the appended schematic drawings, which shows a presently preferred embodiment of the invention.
Figure 1 is a schematic drawing indicating the manner in which an apparatus and a wearable device communicates with each other and with a remote server.
Figure 2 is a drawing corresponding to figure 1 in respect of an alternative embodiment.
Figure 3 is a schematic drawing of a user using an apparatus and wearing a wearable device.
Figure 4 is illustrates the method for controlling an apparatus.

### Detailed description of preferred embodiments

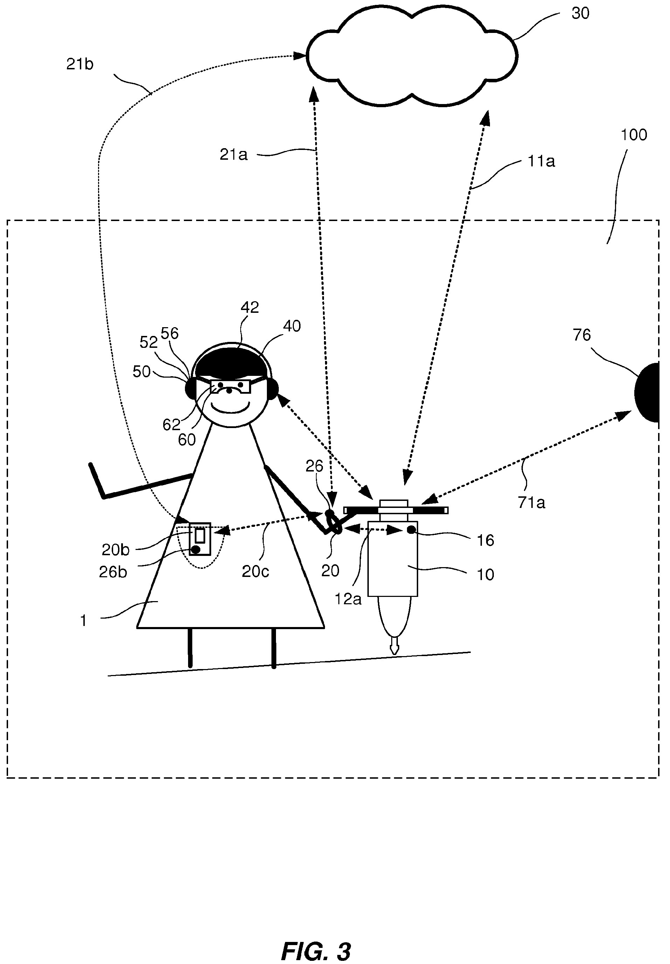

With reference to figure 3, the preferred embodiments will be described in the context of a user 1 operating an apparatus 10, such as a jack hammer. The user 1 wears an wearable device 20, such as a wrist band or smartwatch. The wearable device 20 may alternatively be a mobile phone.

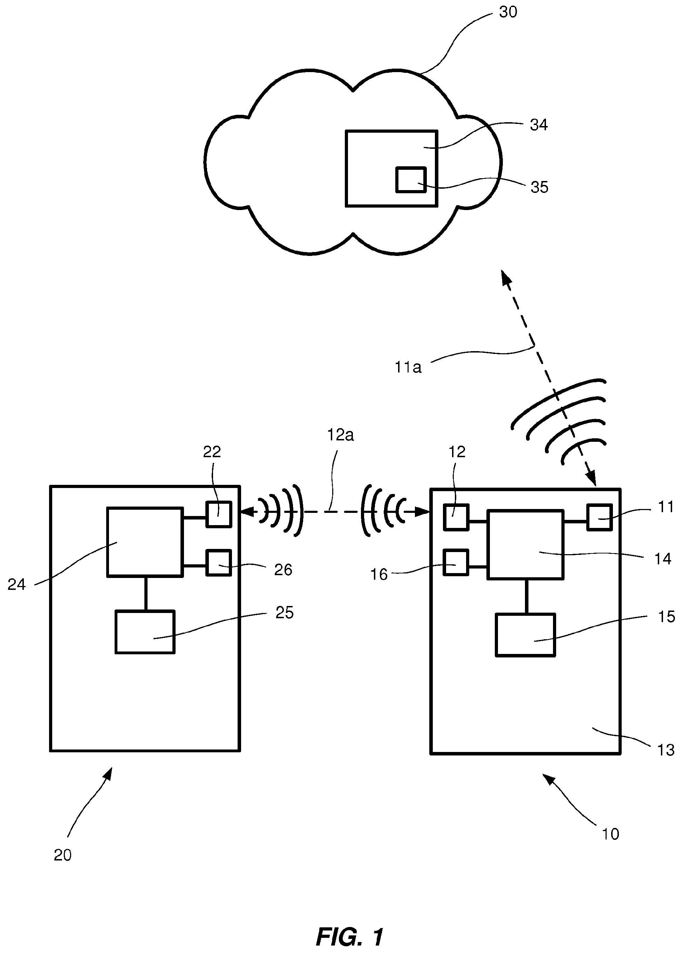

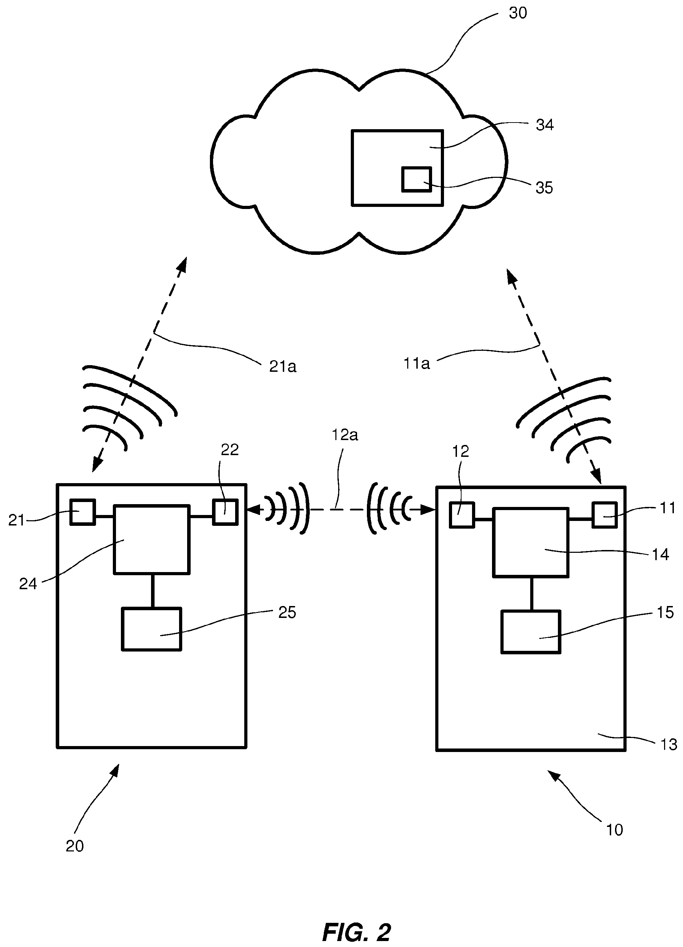

As shown in figures 1 and 2, the apparatus 10 comprises a communication device 11 for communication 11 a with a cellular wide range network 30 and a communication device 12 for short range communication 12a with a wearable device 20. The two communication devices may be completely separate devices or may be partly distributed or may be fully integrated into a single unit. Preferably they are both part of a single electronics unit 13 but have partly separate hardware, such as separate antennas. The electronics unit 13 typically is also provided with a processor 14 and a memory 15.

The wearable device 20 comprises a short range communication device 22 for short range communication 12a with the apparatus 10. The wearable device 20 may also comprise a processor 24 and/or a memory 25.

In the embodiment of figure 1, the wearable device 20 is not provided with any communication device 11 for communication 11 a with a cellular wide range network 30. In the embodiment of figure 2, the wearable device 20 is provided with a communication device 21 for communication 21 a with the cellular wide range network 30.

The cellular wide range network 30 comprises, as e.g. shown in figures 1 and 2, at least one server 34 having access to a memory 35.

The wearable device 20 is associated with a specific user 1. The wearable device 20 may be an ID-card indicating the identity of the person wearing or carrying the ID-card and thereby be associated with the user 1.

The wearable device 20 may be a smartwatch and/or a mobile phone. As indicated in figure 3, the wearable device 20 may be distributed in the sense that it includes more than one physical entity, a smartwatch 20 and a mobile phone 20b.

The smartwatch 20 or mobile phone 20b may run a software application including a device key. The device key may be generated by the software application or may be received by the software application. The smartwatch 20 or mobile phone 20b may communicate its device key to the apparatus 10 and/or to a remote server 34. The apparatus 10 may also run a software application including an apparatus key. The apparatus key may be generated by the software application or may be received by the software application. The device key may be associated with the user 1 e.g. by the profile or accounts set-up by the user on the wearable device 20, 20b. The profiles or accounts may be set-up to require a login before it is possible to assign a device key and/or before it is possible to associate the device key with the apparatus key. Such a login procedure may also be useful to control if operation of the apparatus 10 is allowed when the user 1 is about to actually use the apparatus 10.

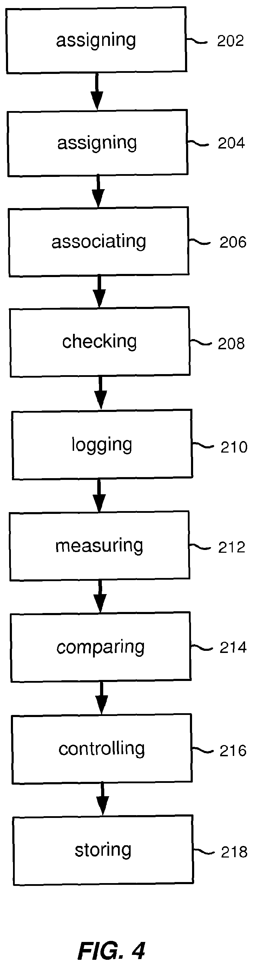

With reference to figure 4, the method for storing data for determination of a specific user's exposure to a danger factor caused by usage of an apparatus comprises in short;

An apparatus key is assigned 202 to the apparatus 10.

A device key is assigned 204 to the wearable device 20.

Associating 206 the apparatus key with the device key thereby establishing which user 1 is presently associated with which apparatus 10. This step 206 is based on that the wearable device 20 is associated with a specific user.

At operation of the apparatus 10, the apparatus 10 check 208 if the wearable device is within reach of the short range communication. The check 208 may be performed at the initiation of the operation of the apparatus 10, such as when starting the apparatus 10. The check 208 may be performed continuously during operation. The check 208 may be performed intermittently during operation. The check 208 may be performed when ending the operation. The check 208 may be performed according to any combination of the above. By checking if the wearable device 20 is within reach of the short range communication 12a, it is possible to with a greater certainty come to the conclusion that it is the associated user 1 that actually operates the apparatus 10 and that the data pertaining to the logging, measuring or comparing actually relates to the associated user 10.

During operation of the apparatus 10 there is performed a logging 210 of data pertaining to actual use of the apparatus 10. Actual use of the apparatus 10 causes the user 1 being subjected to one or more predetermined danger factors caused by the apparatus 10, whereby the logged data thereby pertains to actual exposure of the user 1 to the danger factors.

During operation of the apparatus 10 there is performed a measuring 212 of a quantity of a physical entity pertaining to the predetermined danger factors. Thereby a measurement pertaining to actual exposure is acquired.

During operation of the apparatus 10 there is performed a comparison 214 of the logged data and the measurement pertaining to the actual exposure with a predetermined allowable exposure.

The method also includes storing 218 data pertaining to the logging, measuring or comparing together with the device key in a memory.

The method may be used for controlling 216 operation of the apparatus. In response to the checking 208 revealing that the wearable device 20 being out of range of the short range communication 12a with the apparatus 10, the apparatus 10 may be set in a safe mode in which the apparatus 10 is inoperable or operable in a restricted manner.

If the short range communication protocol is e.g. BAN (Body Area Network) it is possible to be close to certain that it is the associated user that operates the apparatus.

The controlling 216 of the operation may also comprise setting the apparatus 10 in a safe mode (inoperable or operable in a restricted manner) in response to the actual exposure reaching a predetermined allowable exposure.

In figure 3, it is shown that the apparatus 10, such as a jack hammer 10, is provided with a sensor 16 positioned in or on the apparatus 10 for measuring a quantity of a physical entity. This sensor 16 may e.g. be an accelerometer e.g. measuring the movement, i.e. the vibration of the apparatus 10.

In figure 3, there is also shown a sensor 26 on the wearable device 20. This sensor 26 may also be an accelerometer. The sensor 26 may include other sensors, such as a microphone, or other kinds of sensors measuring the same physical entity or other physical entities.

The user may also position or wear other accessories, such as a helmet 40, ear protection 50 and protective glasses 60. The measuring of a quantity of a physical entity may be performed by a sensor 56 positioned in or on an accessory 50 (ear protection) to the apparatus 10, wherein the accessory is provided with a communication device 52 for short range communication with the apparatus 10. The accessory may be a wearable accessory, preferably a safety equipment to be worn during operation of the apparatus. The glasses 60 and the helmet 40 does not carry any sensor but they are provided with devices 62, 42 for short range communication. In response to any of the accessories 40, 50 ,60 being out of range of the short range communication with the apparatus 10, the apparatus may be set in a safe mode.

In the embodiment shown in figure 3, the secondary or distributed part 20b (the mobile phone) of the wearable device 20 also includes a sensor 26b.

The communication 20c between the apparatus 10 and the wearable device 20 and possibly also a mobile phone 20b may be understood as forming a personal area network (PAN), i.e. the PAN is a computer network used for data transmission amongst devices such as computers, phones, tablets, personal digital assistants and wearable devices. PAN typically uses Bluetooth or Infrared Data Association for wireless communication.

It may be noted that the short range communication used for instance to determine if a safety equipment is worn or not may be different from the short range communication used to transmit the device key from the wearable device to the apparatus. It is e.g. suitable to use BAN (Body Area Network) as a means to determine if the safety equipment is worn or not. It is e.g. suitable to use RFID to retrieve the device key if the device key resides on a user's ID-badge. Alternatively it is e.g. suitable to use BLE to retrieve the device key if the device key resides in a user's smartwatch. It is preferred that the apparatus, accessories, and the device support more than one such communication protocol.

In figure 3 there is also shown an accessory sensor 76 positioned in the environment 100. This sensor also communicates with the apparatus 10 using short range communication71a.

As shown in figure 3, the mobile phone 20b may also communicate 21 b with the cellular wide range network 30.

## Claims

1. Method for storing data for determination of a specific user's exposure to a danger factor caused by usage of an apparatus, the method comprising
assigning an apparatus key to the apparatus, the apparatus comprising a communication device for communication with a cellular wide range network and a communication device for short range communication with a wearable device,
assigning a device key to the wearable device, the wearable device comprising a short range communication device for short range communication with the apparatus, wherein the wearable device is associated with a specific user,
associating the apparatus key with the device key thereby establishing which user is presently associated with which apparatus,
during operation of the apparatus
logging data pertaining to actual use of the apparatus, wherein actual use of the apparatus causes the user being subjected to one or more predetermined danger factors caused by the apparatus, whereby the logged data thereby pertains to actual exposure of the user to the danger factors,
measuring a quantity of a physical entity pertaining to the predetermined danger factors during actual use of the apparatus, thereby acquiring a measurement pertaining to actual exposure,
comparing the logged data and the measurement pertaining to
the actual exposure with a predetermined allowable exposure, storing data pertaining to the logging, measuring or comparing together with the device key in a memory.

2. Method according to claim 1, wherein at operation of the apparatus, the apparatus checks if the wearable device is within reach of the short range communication.

3. Method for controlling operation of the apparatus, the method comprising the method according to claim 1 or 2, wherein in response to the wearable device being out of range of the short range communication with the apparatus, the apparatus is set in a safe mode in which the apparatus is inoperable or operable in a restricted manner.

4. Method according to any one of claims 1-3, further comprising in response to the actual exposure reaching a predetermined allowable exposure, setting the apparatus in a safe mode in which the apparatus is inoperable or operable in a restricted manner.

5. Method according any one of claims 1-4, wherein the measuring of a quantity of a physical entity is performed by a sensor positioned in or on the apparatus.

6. Method according to any one of claims 1-5, further comprising providing an accessory being provided with a communication device for short range communication with the apparatus

7. Method according to any one of claims 6, wherein the measuring of a quantity of a physical entity is performed by a sensor positioned in or on the accessory to the apparatus.

8. Method according to claim 6 or 7, wherein the accessory is a wearable accessory, preferably a safety equipment to be worn during operation of the apparatus.

9. Method according to any one of claims 6-8, wherein in response to the accessory being out of range of the short range communication with the apparatus, the apparatus is set in a safe mode in which the apparatus is inoperable or operable in a restricted manner.

10. Method according to any one of claims 1-9, wherein the measuring of a quantity of a physical entity is performed by a sensor positioned in or on the wearable device.

11. Method according to any one of claims 1-10, wherein short range communication comprises Bluetooth, low energy Bluetooth, infrared, near field communication (NFC), ultraband, Zigbee, Wifi, Infrared communication, ultrasound, or RFID

12. Method according to any one of claims 1-11, wherein the communication with a cellular wide range network comprises a local area network, a LAN, an internet, or a telecommunication network. The cellular wide range network may e.g. be based on standards such as LTE, GSM, UMTS, and WCDMA.

13. Method according to any one of claims 1-12, wherein the wearable device is associated with the user by the wearable device comprising a device memory in which there is stored data pertaining to the device key, wherein the wearable device communicates with the apparatus and transmit information concerning its device key to the apparatus, and wherein the apparatus communicates with a remote server and transmit information concerning the device key to the remote server, wherein the remote server comprises a memory comprising information concerning the device key and a user associated with the device key.

14. Method according to any one of claims 1-13, wherein the wearable device is associated with the user by the wearable device comprising a device memory in which there is stored data pertaining to the device key and data pertaining to the user.
